# EUROPÄISCHE PATENTANMELDUNG

(11) **EP 3 786 088 A1**
(43) Veröffentlichungstag der Anmeldung: **03.03.2021**
(21) Anmeldenummer: 19193622.8
(22) Anmeldetag: 26.08.2019
(51) Int. Cl.: B65G 43/08, B65G 47/50, B65G 47/71, B65G 47/84, B65G 47/96, B07C 3/08

(54) **VERFAHREN UND SYSTEM ZUM SORTIEREN VON LAGEINSTABILEN SORTIERSTÜCKEN**

(71) Anmelder: Siemens Aktiengesellschaft, 80333 München (DE)
(72) Erfinder: ENENKEL, Peter, 78462 Konstanz (DE)
(74) Vertreter: Maier, Daniel Oliver

(57) **Zusammenfassung**

Der vorliegenden Erfindung liegt die Aufgabe zugrunde, ein Verfahren und ein System zum Sortieren von Sortierstücken in mit ihrer Zieldestination logisch verknüpfte Endstellen anzugeben, welches sich durch eine hohe Sortierkapazität bei hoher Sortierqualität auch für lageinstabile Sortierstücke auszeichnet.

Das Verfahren umfasst:
a) einen Sortierförderer (8, 30, 38), der entlang eines Förderweges (10) eine Kette von zusammenhängenden Aufnahmeelementen (12, 32, 40) für die Sortierstücke (4a bis 4d) umfasst,
b) eine Anzahl von Endstellen (6),
c) eine Aufgabevorrichtung (18, 33, 42) zum Aufgeben der Sortierstücke (4a bis 4d) auf den Sortierförderer (8, 30, 38);
d) mindestens ein Erfassungsmittel (20), mit dem das oder die von dem Sortierstück (4a bis 4d) auf dem Sortierförderer (8, 30, 38) beanspruchten Aufnahmeelemente (12, 32, 40) zu dem Sortierstück (4a bis 4d) zuordenbar ist; und
e) die Sortiersteuerung (16), die weiter ausgestaltet ist, den Sortierförderer (8, 30, 38) zum Fördern des Sortierstücks (4a bis 4d) entlang des Förderweges (10) anzusteuern und die Absortierelemente (14, 52) für zumindest einen Teil der so einem Sortierstück (4a bis 4d) zugeordneten Aufnahmeelemente (12, 32, 40) zur Abgabe des Sortierstücks (4a bis 4d) in die diesem Sortierstück logisch zugeordnete Endstelle (6) anzusteuern.

## Beschreibung

Die Erfindung betrifft ein Verfahren und ein System zum Sortieren von Sortierstücken in mit ihrer jeweiligen Zieldestination logisch verknüpfte Endstellen.

Grosse Logistikzentren mit Gepäck-, Post- und/oder Paketsortieranlagen, in welchen Gepäckstücke, Briefe und/oder große Briefe und/oder Pakete verarbeitet werden, werden beispielsweise von der Firma Siemens Logistics GmbH vertrieben.

In derartigen Logistikzentren werden Gepäckstücke, Briefe, Pakete bzw. Sendungen (im Folgenden als Sortierstücke bezeichnet) an einer Vereinzelungsvorrichtung (Stoffeingabe) aus einem Vorrat, z.B. einem Stapel, vereinzelt, von einem Fördersystem entlang eines Förderweges transportiert und an mehreren Sortierausgängen, realisiert zum Beispiel durch Sortierweichen oder Querbandsorter oder Kippvorrichtungen, den jeweiligen Zielstellen, wie z.B. Zielstellen einer Gepäcksortieranlage in einem Flughafen, zugeführt. Während des Transport- oder Sortierprozesses werden die Sortierstücke in die Zielstellen sortiert. Jeder Zielstelle wird für den Sortierprozess mittels einer Sortier-/Transportsteuerung jeweils ein variabler Ziel-Code entsprechend der Sortierlogik bzw. entsprechend dem Sortierprozess zugeordnet. Auch den Sortierstücken wird ein variabler Ziel-Code zugeordnet, welchem entsprechend sie dann in eine Zielstelle sortiert werden. Mehrere Zielstellen können auch den gleichen Ziel-Code haben, beispielsweise bei Zieladressen mit bekannt hohem Sendungsaufkommen. Das bietet sich z. B. an, wenn die Kapazität einer Zielstelle nicht ausreicht, um alle Sortierstücke für diesen Ziel-Code aufzunehmen.

Mit dem starken Aufkommen von Kleingutsendungen, für die in den nächsten Jahren jährliche Zuwachsraten von mehr als 20% prognostiziert werden, steigt zum einen die Anzahl der zu verarbeitenden Sortierstücke massiv an, während zum anderen die sehr häufig nicht homogene Verpackung dieser Kleingutsendungen die Sortierung dieser allgemein als lageinstabil bezeichneten Sortierstücke im Vergleich zu einem herkömmlichen quaderförmigen Paket oder Päckchen wesentlich anspruchsvoller macht. Für diese Kleingutsendungen, die im Wesentlichen aus dem B2C-E-Commerce stammen und extrem heterogene und lageinstabile Verpackungen aufweisen, wird der zukünftige Anteil am gesamten Stückgutaufkommen auf mehr als 50% geschätzt.

Weiter wird im Zuge der Automatisierung der Sortierprozesse eine Vollautomatisierung des Prozesses gemäss dem Schlagwort «One Touch» auf möglichst viele Endstellen angestrebt. Um an dieser Stelle einen durchsatzmindernden mehrstufigen oder sequenziellen Sortierprozess vermeiden zu können, ist es daher erforderlich möglichst viele Endstellen auf kleinstem Raum realisieren zu können. Diese Anforderung lässt sich wiederum nur durch Sortiersysteme erreichen, die eine Anordnung der Endstellen und der Fördertechnik über mehrere Ebenen ermöglichen und somit raumgängig sind.

Bisher werden diese neuartigen Sendungsformate überwiegend mit Bomb-bay-, Kippschalen- oder Schuhsortern sortiert. Diese Sortertypen sind sogenannte Stetigförderer mit gleich grossen Aufnahmeabschnitten für das Sortiergut in konstantem Abstand. Somit ist der Durchsatz der Sortieranlage im Wesentlichen durch die Grösse der grössten zu sortierenden Sendung definiert, die somit die Grösse der Aufnahmefläche vorgibt.

Querband-, Rollen- oder Rollenbahnsorter sind aufgrund der Lage- und Forminstabilität der E-Commerce-Sendungen für diese Aufgabe ungeeignet, da sie zu deutlichen Einschränkungen im verarbeiteten Volumen führen.

Der vorliegenden Erfindung liegt daher die Aufgabe zugrunde, ein Verfahren und ein System zum Sortieren von Sortierstücken in mit ihrer Zieldestination logisch verknüpfte Endstellen anzugeben, welches sich durch eine hohe Sortierkapazität bei hoher Sortierqualität auch für lageinstabile Sortierstücke auszeichnet.

Die Aufgabe wird bezüglich des Verfahrens erfindungsgemäss durch ein Verfahren zum Sortieren von Sortierstücken in mit ihrer Zieldestination logisch verknüpfte Endstellen gelöst, umfassend die folgenden Verfahrensschritte:
a) Bereitstellen eines Sortierförderers, der entlang eines Förderweges eine Kette von zusammenhängenden Aufnahmeelementen für die Sortierstücke umfasst, wobei zumindest ein Teil dieser Aufnahmeelemente individuell ansteuerbare Absortierelemente umfasst, mit denen ein Sortierstück gemäss seiner Zieldestination in die entsprechend logisch zugeordnete Endstelle aus dem Förderweg ausschleusbar ist;
b) Aufgeben des Sortierstücks auf den Sortierförderer;
c) Zuordnen des oder der von dem Sortierstück auf dem Sortierförderer beanspruchten Aufnahmeelemente zu dem Sortierstück; und
d) Fördern des Sortierstücks entlang des Förderweges und Auslösen der Absortierelemente für zumindest einen Teil der so zugeordneten Aufnahmeelemente zur Abgabe des Sortierstücks in die diesem Sortierstück logisch zugeordnete Endstelle.

Bezüglich des Systems wird diese Aufgaben erfindungsgemäss durch ein System zum Sortieren von Sortierstücken in mit ihrer Zieldestination logisch verknüpfte Endstellen gelöst, umfassend:
a) einen Sortierförderer, der entlang eines Förderweges eine Kette von zusammenhängenden Aufnahmeelementen für die Sortierstücke umfasst, wobei zumindest ein Teil dieser Aufnahmeelemente individuell ansteuerbare Absortierelemente umfasst, mit denen ein Sortierstück gemäss seiner Zieldestination in die entsprechend logisch zugeordnete Endstelle aus dem Förderweg ausschleusbar ist;
b) eine Anzahl von Endstellen, denen von einer Sortiersteuerung temporär eine oder mehrere Zieldestinationen logisch zuordenbar sind;
c) eine Aufgabevorrichtung zum Aufgeben der Sortierstücke auf den Sortierförderer;
d) mindestens ein Erfassungsmittel, mit dem das oder die von dem Sortierstück auf dem Sortierförderer beanspruchten Aufnahmeelemente zu dem Sortierstück zuordenbar ist; und
e) die Sortiersteuerung, die weiter ausgestaltet ist, den Sortierförderer zum Fördern des Sortierstücks entlang des Förderweges anzusteuern und die Absortierelemente für zumindest einen Teil der so einem Sortierstück zugeordneten Aufnahmeelemente zur Abgabe des Sortierstücks in die diesem Sortierstück logisch zugeordnete Endstelle anzusteuern.

Auf diese Weise zeichnet sich diese Lösung durch eine flexible «Taschengrösse» zur Aufnahme der Sortierstücke aus, die sich mit dem Auflegen des Sortierstücks durch die Bestimmung der von dem Sortierstück beanspruchten Aufnahmeelemente zu einer virtuellen immer passenden Tasche (virtuelle Gruppe von Ausnahmeelementen) definieren lässt. Somit ist der Aufbau von technisch vergleichsweise einfach zu realisierenden Stetigförderern möglich, die durch die konstante Lücke («constant gap») zwischen den auf den Sortierförderer aufgegebenen Sortierstücken sehr hohe Durchsätze bei vergleichsweise geringer Fördergeschwindigkeit erreichen können. Zudem erlaubt die Bildung der Ketten von Aufnahmeelemente auch eine gewisse Kurventauglichkeit des Sortierförderers, so dass sich der Sortierförderer auch über mehrere Ebenen mit einer hierdurch erreichbaren hohen Anzahl von anordenbaren Endstellen auszeichnet. Einen weiteren Vorteil dieser Ausgestaltung stellt die Möglichkeit der vergleichsweise einfachen Topload-Beschickung des Sortierförderers dar, da sowohl die Länge des Sortierstücks als auch die Lücken zwischen zwei Sortierstücken variabel sind und damit keine exakte Synchronisierung des Beschickung wie bei einem Constant-Pitch-Sorter erforderlich ist.

Wie schon vorangehend beschrieben sieht es eine bevorzugte Ausführungsform der Erfindung vor, dass die Sortierstücke mit einem vorgebbaren Abstand auf den Sortierförderer aufgegeben werden können. Damit ist der Abstand zwischen den Sortierstücken an die Art und die Absortiereigenschaften des Sortierförderer sowie die Betriebsbedingungen, wie z.B. die Fördergeschwindigkeit, anpassbar.

Gerade bei lageinstabilen Sortierstücken ist es selbst bei vorheriger Kenntnis der Abmessungen des Sortierstück in der Sortiersteuerung nicht immer genau möglich von vornherein zu bestimmt, wie sich das Sortierstück dann tatsächlich nach der Aufgabe auf dem Sortierförderer ablegen wird. Daher ist besonders vorteilhaft, wenn die Zuordnung der von einem Sortierstück auf dem Sortierförderer beanspruchten Aufnahmeelemente erst nach dem Aufgeben des Sortierstücks auf den Sortierförderer vorgenommen wird.

In zweckmässiger Weise können hierfür Erfassungsmittel vorgesehen sein, mit denen die von dem Sortierstück auf dem Sortierförderer beanspruchten Aufnahmeelemente detektierbar sind. Als ein mögliches Erfassungsmittel kann beispielsweise eine Kamera eingesetzt sein, deren Bilder mit einer Software nachbearbeitet werden, die feststellt, welche Aufnahmeelemente zumindest teilweise von einem Sortierstück abgedeckt sind. Die Aufnahmeelemente können zur Erleichterung der optischen Erfassung zum Beispiel auch optisch gut sichtbare Markierungen aufweisen, die von einem Sortierstück zum Beispiel abgedeckt werden und somit für die Kamera nicht mehr sichtbar sind. Alternativ oder auch ergänzend können die Aufnahmemittel über einen kapazitiven und/oder optischen Sensor verfügen, mit dem die von dem Sortierstück auf dem Sortierförderer beanspruchten Aufnahmeelemente detektierbar sind.

Damit ein Sortierstück dann auch an einer Endstelle aus dem Sortierlauf ausschleusbar ist, kann es in der Sortiersteuerung vorgesehen sein, dass die von einem Sortierstück beanspruchten Aufnahmeelemente eine logische Aufnahmegruppe bilden und die dieser logischen Aufnahmegruppe zugeordneten Absortierelemente gleichzeitig oder zeitverzögert auslösbar sind. Hierbei können beispielsweise für diese Aufnahmegruppe auch nur die Absortierelemente jedes zweiten Aufnahmeelements aktiviert werden. Welcher Art konkret die Absortierelemente dabei sein können, wird weiter nachstehend noch detaillierter erläutert.

Eine mögliche Ausführungsform für einen Sortierförderer kann erzielt werden, wenn der Sortierförderer als Schuhförderer und die Absortierelemente als senkrecht zur Förderrichtung des Sortierförderers bewegbare Abwurfstifte, die über eine von dem Aufnahmeelement gebildete Auflagefläche hinausragen, ausgestaltet sind. Diese Abwurfstifte schieben das Sortierstück dann seitlich von den Aufnahmeelementen in die gewünschte Endstelle. Die Abwurfstifte können dabei auf dem jeweiligen Aufnahmeelement mittels eines von einem kleinen Elektromotor angetriebenen Zahnriemen auch zu beiden Seiten hin bewegt werden, sodass ein Abwurf des Sortierstücks auch in an beiden Seiten angeordnete Endstellen ermöglicht ist, was wiederum eine höhere Dichte der Endstellen ermöglicht. Zudem kann auch eine Anordnung dieser Abwurfstifte auf beiden Seiten der Aufnahmeelemente vorgesehen sein, wodurch es auch möglich ist, ein als besonders lageinstabil erkanntes Sortierstück während des Transports zur entsprechenden Endstelle «einklemmen» zu können.

Eine weitere mögliche Ausführungsform für einen Sortierförderer kann erzielt werden, wenn der Sortierförderer als Kippsorter und die Absortierelemente als Kippelemente ausgestaltet sind, wobei jedem Aufnahmeelement ein Kippelement zugeordnet ist, mit dem das Aufnahmeelement um eine in Förderrichtung verlaufende Achse kippbar ausgestaltet ist. Der dabei erreichbare Kippwinkel kann bis zu 180 Grad jeweils in beiden Kipprichtungen betragen.

Alternativ kann der Sortierförderer auch als Taschensorter und die Absortierelemente als Bomb-bay-Elemente ausgestaltet sein, wobei jeder Boden des Aufnahmeelement als Bomb-bay-Element ausgestaltet ist, mit dem das Aufnahmeelement nach unten hin öffenbar und nach erfolgreichem Abwurf des Sortierstücks wieder verschliessbar ist.

Eine weitere vorteilhafte Alternative kann sich für den Sortierförderer ergeben, wenn der Sortierförderer als Taschensorter und die Aufnahmeelemente als einseitig an einem Fördermittel aufgehängte mindestens zweiteilige eine V-förmige Ablagefläche bildende Aufnahmeelemente und die Absortierelemente als Kippmechanismus ausgestaltet sind, wobei der Kippmechanismus den von der Aufhängungsseite abgewandten Teil des Aufnahmeelements steuerbar um eine Kippachse (im Wesentlichen parallel zum Richtung des Förderwegs) schwenkbar nach unten fallen lässt.

Das Sortierstück liegt somit in der von der V-Form gebildeten Falz und fällt mit dem Auslösen des Kippmechanismus einfach nach unten in die gewünschte Endstelle. Der Vorteil diese Ausgestaltung besteht darin, dass hier zwei Taschensorter parallel betrieben werden können, so dass pro Längeneinheit des Sortierförderer sogar zwei Sortierstücke aufgenommen werden können. Somit ergibt ein rechter und ein linker Sortierstrang mit zentraler Aufhängung und zentralem Antrieb in Förderrichtung mit entsprechend verdoppelter Sortierleistung.

Vorteilhafte Ausgestaltungen der vorliegenden Erfindung werden nachfolgend detailliert mit Bezug auf die Zeichnung näher erläutert. Dabei zeigt:
- Figur 1: in schematischer Ansicht einen Ausschnitt aus einem Schuhsorter;
- Figur 2: in schematischer Ansicht einen Ausschnitt aus dem Schuhsorter gemäss Figur 1;
- Figur 3: in schematischer Ansicht einen Ausschnitt aus einem Kippsorter;
- Figur 4: in schematischer Ansicht einen Ausschnitt aus dem Kippsorter gemäss Figur 3;
- Figur 5: in schematischer Ansicht einen Ausschnitt aus einem Taschensorter; und
- Figur 6: in schematischer Ansicht einen Ausschnitt aus dem Taschensorter gemäss Figur 5.

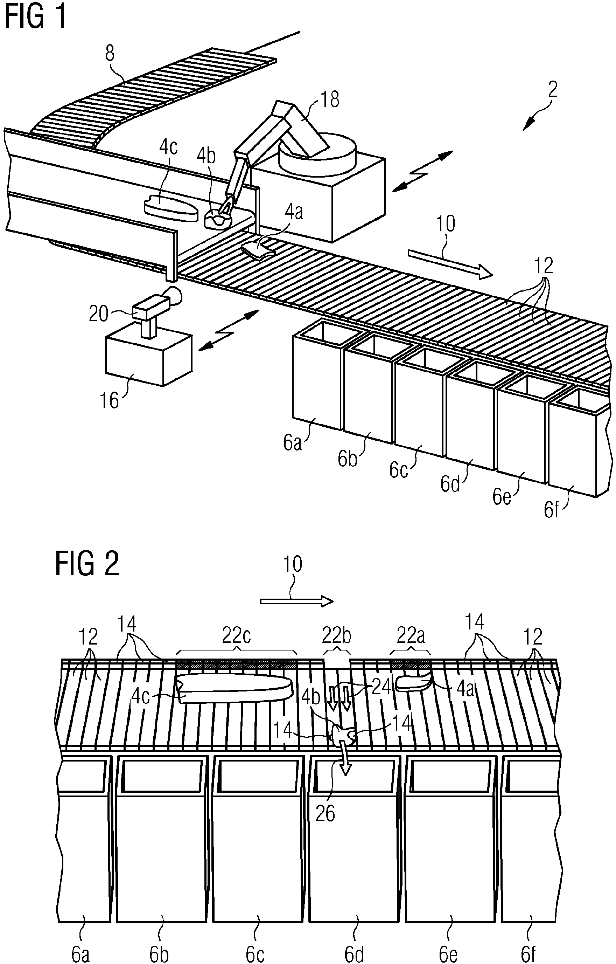

Figur 1 zeigt schematisch einen Ausschnitt aus einem System 2 zum Sortieren von lageinstabilen Sortierstücken 4a, 4b, 4c in mit ihrer Zieldestination logisch verknüpfte Endstellen 6a bis 6f. Das System 2 umfasst in dieser Ausführungsform einen Schuhsorter 8, der entlang eines Förderweges 10 eine Kette von zusammenhängenden Aufnahmeelementen 12 für die Sortierstücke 4a bis 4c umfasst. Die Aufnahmeelemente sind in der Mitte elastisch gekoppelt und können sich nach Art einer Kulissenführung in kurvigen Bereichen auch überlappen. Jedes Aufnahmeelement 12 weist im vorliegenden Ausführungsbeispiel einen individuell ansteuerbaren Abwurfstift 14 auf, mit denen ein Sortierstück gemäss seiner Zieldestination in die entsprechend logisch zugeordnete Endstelle 6a bis 6f aus dem Förderweg 10 ausschleusbar ist.

Jeder Abwurfstift 14 ist von einem durch einen kleinen hier nicht weiter dargestellten Motor angetriebenen Zahnriemen in Richtung von Pfeilen 16 (siehe Figur 2) quer zur eigentlichen Transportrichtung (Pfeil 10) bewegbar. Dem kleinen Elektromotor ist zudem eine kleine Elektronikeinheit beigestellt, mittels der der Elektromotor individuell und auf drahtlosem Kommunikationsweg auf eines oder mehrere Aufnahmeelemente 12 bezogen ansteuerbar ist. Zur elektrischen Versorgung kann unterhalb des Schuhsorters 8 eine hier nicht weiter dargestellte Stromschiene vorgesehen sein. Alternativ zur drahtlosen Kommunikation wäre über diese Stromschiene auch eine Powerline-Kommunikation denkbar.

Neben dem Schuhsorter 8 sind eine Anzahl von Endstellen 6a bis 6f angeordnet, denen vor einer Sortiersteuerung 16 temporär eine oder mehrere Zieldestinationen logisch zugeordnet sind. Zudem weist das System 2 eine Aufgabevorrichtung 18 zum Aufgeben der Sortierstücke 4a bis 4c auf den Schuhsorter 8 auf. Weiter ist hier als Erfassungsmittel eine Kamera 20 vorgesehen, mit der das oder die von dem jeweiligen Sortierstück 4a bis 4c auf dem Schuhsorter 8 beanspruchten Aufnahmeelemente 12 zu dem jeweiligen Sortierstück 4a bis 4c zugeordnet werden können. Diese Zuordnungen erfolgt jeweils für eine virtuell gebildete Gruppe 22a, 22b, 22c von Aufnahmeelementen 12, so wie dies in Figur 2 für die Sortierstücke 4a und 4c dargestellt ist. Das Sortierstück 4a belegt dabei drei Aufnahmeelemente 12 und das Sortierstück 4c seiner Länge entsprechend sechs Aufnahmeelemente 12.

Weiter umfasst das System 2 die schon genannte Sortiersteuerung 16, die weiter ausgestaltet ist, den Schuhsorter 8 zum Fördern der Sortierstücke 4a bis 4c entlang des Förderweges 10 anzusteuern. Weiter steuert die Sortiersteuerung 16 auch die Abwurfstifte 14 bzw. die sie antreibenden kleinen Elektromotoren an, damit die Abwurfstifte 14 für die dem jeweiligen Sortierstück zugeordnete Gruppe von Aufnahmeelemente 12 zur Abgabe des jeweiligen Sortierstücks in die diesem Sortierstück logisch zugeordnete Endstelle 6a bis 6f anzusteuern.

Figur 2 zeigt schematisch genau diese Situation in einem Ausschnitt aus dem System 2 gemäss Figur 1 für das Sortierstück 4b. Für die Gruppe 22b von zwei Aufnahmeelementen 12 sind die zwei zugehörigen Abwurfstifte 14 gerade in Richtung der beiden Pfeile 24 bewegt worden, wodurch das Sortierstück 4b von dem Schuhsorter 8 heruntergeschoben und in die Endstelle 6d im kurzzeitig freien Fall (Pfeil 26) einsortiert wird.

Auf diese Weise können durch die dynamische und virtuelle Zusammenschaltung der von dem Sortierstück 4b als Auflagefläche beanspruchten Aufnahmeelemente 12 zu der Gruppe 22b und die entsprechend feine Granularität der Aufnahmeelemente 12 (Länge in Förderrichtung gesehen im Bereich einiger Zentimeter) raumgängige «constant gap»-Sorter realisiert werden, die selbst bei vergleichsweise kleinen Fördergeschwindigkeiten (z.B. im Bereich von 1 bis 2 m/sec) sehr viele kompakt anordenbare Endstellen sehr durchsatzstark bedienen können.

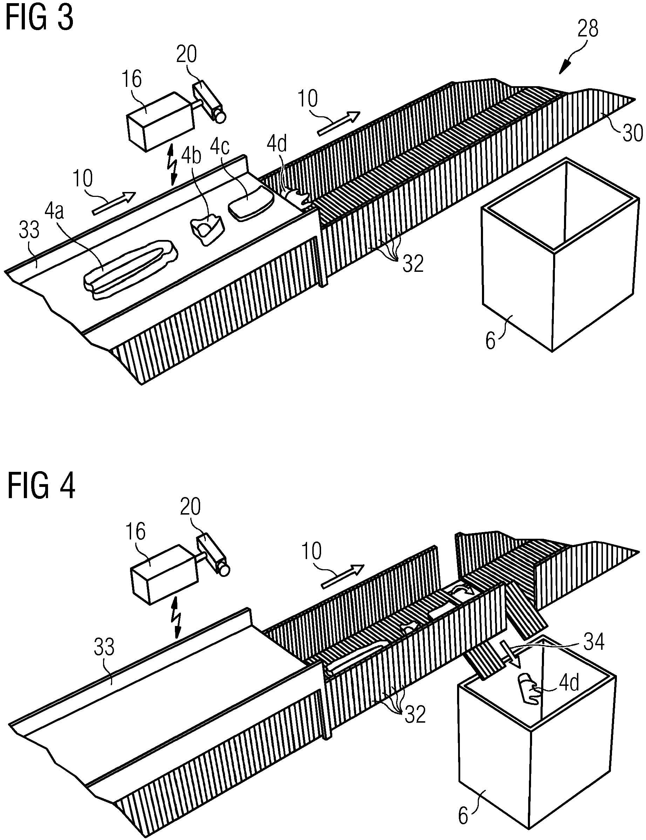

Die Figur 3 zeigt diese Situation nun schematisch am Beispiel eines Sortiersystems 28 mit einem Kippsorters 30, der aus einer Kette von gekoppelten Aufnahmeelementen 32 gebildet ist, die zusammen einen U-förmigen Kanal für die Aufnahme von Sortierstücken 4a bis 4d bilden. Ein Top-Load-Förderer 33 befördert die je nach Verpackung zum Teil sehr lageinstabilen Sortierstücke 4a bis 4d auf den Kippsorter 30, der die Sortierstücke 4a bis 4d entlang des Förderweges 10 bewegt. Auch wenn hier beispielhaft nur eine Endstelle 6 dargestellt ist, sind entlang des Kippsorters 30 eine Vielzahl von Endstellen vorgesehen, die hier auch auf beiden Seiten entlang des Förderweges 10 angeordnet sein können. Jedes Aufnahmeelement 32 hat - in Förderrichtung 10 gesehen - eine Länge von 5 cm und kann mittels eines elektromotorisch angetriebenen Kippmechanismus (hier nicht dargestellt) um eine zentral angeordnete Kippachse zu beiden Seiten um bis 180° gekippt werden (siehe auch Pfeil 34 in Figur 4).

Nach dem Aufbringen der Sortierstücke 4a bis 4d auf den Kippsorter 30 zeichnet die Kamera 20 wieder Bilder von den dann auf dem Kippsorter liegenden Sortierstücken 4a bis 4d auf. In der Sortiersteuerung werden - wie schon vorstehend beschrieben - eine Auswertung der Bilder und eine Bestimmung der virtuellen Gruppen von Aufnahmeelementen 32, die jeweils von den Sortierstücken 4a bis 4d beaufschlagt sind, vorgenommen. Für jede dieser virtuellen Gruppen können dann mit der Annäherung des Sortierstücks an die für dieses Sortierstück vorgesehene Endstelle die zur der jeweiligen Gruppe gehörenden Kippmechanismen durch ein entsprechendes von der Sortiersteuerung 16 initiiertes Kommando ausgelöst werden, sodass jedes Sortierstück in die entsprechende Endstelle gekippt werden kann.

In dem in Figur 4 gezeigten Ausschnitt aus dem System 28 gemäss Figur 3 ist diese Situation für das Sortierstück 4d dargestellt, welches gerade entlang eines Pfeils 34 in die Endstelle 6 fällt. Hierzu waren die Kippmechanismen für die zugehörige Gruppe von hier sechs Aufnahmeelementen 32 ausgelöst worden, woraufhin diese Gruppe in der zeichnerischen Darstellung mit einem Winkel von grösser 90° zur rechten Seite gekippt wurde. Ebenso wäre es natürlich bei entsprechender Zuordnung der Sortiersteuerung auch möglich gewesen, diese Kippbewegung zur linken Seite zu vollziehen.

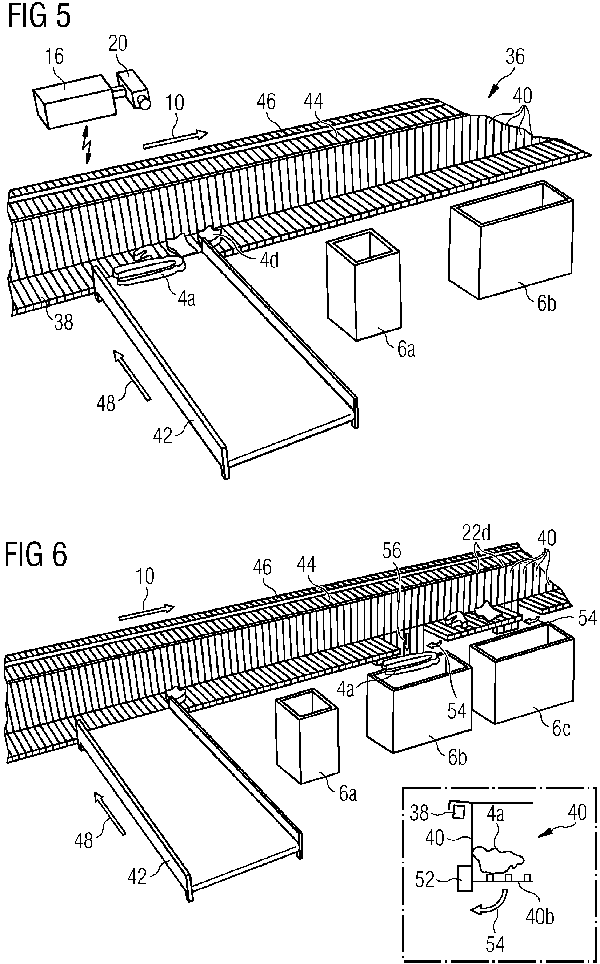

Ein weiteres beispielhaftes System 36 ist in der Figur 5 schematisch anhand eines Taschensorters 38 gezeigt. Dieser Taschensorter 38 bietet mit seinen Aufnahmeelementen 40 eine bankartige Auflagefläche für die Sortierstücke 4a bis 4d. Der Taschensorter 38 weist dabei eine mittig angeordnete Aufhängung und den entsprechenden Antrieb in Förderrichtung 10 auf, sodass auf beiden Seiten des Taschensorters 38 von jeweils einem Beschickungsband 42 Sortierstücke 4a bis 4d auf die Aufnahmeelemente 40 abgelegt werden können. In diese Zeichnung ist nur beispielhaft ein Beschickungsband 42 für einen rechtsseitigen Sortierstrang 44 gezeigt; analog kann dies auch so für den linksseitigen Sortierstrang 46 vorgesehen sein.

Die hier vorgesehene Beschickungsrichtung 48 verläuft hier beispielhaft im Winkel von etwa 90° zur Förderrichtung des Taschensorters 38; es könnten aber ebenso auch viel flachere Winkel vorgesehen sein, so dass die Sortierstücke bereits mit einer Geschwindigkeitskomponente in Richtung des Förderweges 10 auf den Taschensorter 38 aufgelegt werden können.

Auch hier zeichnet wieder die Kamera 20 das Ergebnis des Beschickungsvorgangs auf und mit einer entsprechenden Bild- bzw. Videoanalyse werden die virtuellen Gruppen von Aufnahmeelementen 40 bestimmt, die nach der Beschickung jeweils von den Sortierstücken 4a bis 4d belegt sind. Die hier zweitteilig aufgebauten Aufnahmeelemente 40 bilden dabei eine v-förmige Aufnahmefläche für die Sortierstücke 4a bis 4d. Dabei ist ein erster Teil 40a der Aufnahmeelemente 40 eher senkrecht (oder nur leicht zur Mitte geneigt) ausgerichtet, während der zweite Teil 40b der Aufnahmeelemente 40 eher waagrecht (oder leicht nach aussen hin nach oben geneigt) ausgerichtet ist (siehe Querschnittsdarstellung eines Aufnahmeelements am unteren Rand der Figur 6). Der zweite Teil 40b kann zudem angeformte Noppen 50 aufweisen, die auch eher rundliche Sortierstücke (wie für Sortierstück 4a gezeigt) zumindest auf den Aufnahmeelementen 40 bis zum Abwurf der jeweiligen Sortierstücke 4a bis 4d lagestabil halten (diese Noppen 50 können auch für die Aufnahmeelemente 12 und 32 in den übrigen Ausführungsbeispielen vorgesehen sein).

Wie in Figur 6 unten gezeigt, weist jedes Aufnahmeelement 40 einen individuell ansteuerbaren und als Absortierelement dienenden Kippmechanismus 52 mit entsprechender drahtlos ansteuerbarer Steuerung auf.

Wie in Figur 6 gezeigt, fällt gerade das Sortierstück 4a in die Endstelle 6b (siehe Pfeil 56). Hierzu sind die Kippmechanismen einer acht Aufnahmeelemente umfassenden Gruppe 22d simultan ausgelöst worden, was zu einem gemeinsamen Abkippen (siehe Pfeil 54) des jeweils zweiten Teils 40b der acht involvierten Aufnahmeelemente 40 führt. Zum Abkippen können beispielsweise zwei Zapfen an den beiden aussenliegenden Aufnahmeelementen dieser Gruppe 22d aus den beiden die Gruppe 22d direkt benachbarten Aufnahmeelementen ausgeklinkt und die Kippbremsen (beispielsweise elektromagnetisch realisiert) der Aufnahmeelemente dieser Gruppe 22d gelöst werden. In Figur 6 ist zudem eine weitere weiter in Förderrichtung 10 gelegene Gruppe von Ausnahmeelementen für den Abwurf eines Sortierstücks betätigt worden, welches sich bereits in der Endstelle 6c befindet.

Allen vorstehend genannten Ausführungsbeispielen ist somit der erfinderische Gedanke gemeinsam, dass die jeweils von den unter Umständen sehr lageinstabilen und inhomogenen Sortierstücken auf den jeweiligen Sortern belegten Aufnahmeelemente dynamisch nach der Aufgabe bestimmt und zu virtuellen Gruppen verbunden werden. Dabei können die Sortierstücke mit konstantem Abstand auf die Sorter aufgegeben und durch das gruppenweise Auslösen der entsprechenden Absortierelemente (Mittel zum Ausschleusen aus dem Sortierstrom) in die gemäss der der Sortiersteuerung bekannten Zieldestination entsprechende Endstelle entleert werden.

Die gezeigten Systeme zeichnen sich daher durch eine flexible «Taschengrösse» zur Aufnahme der Sortierstücke 4a bis 4d aus, die sich mit dem Auflegen des Sortierstücks durch die Bestimmung der von dem Sortierstück beanspruchten Aufnahmeelemente zu einer virtuellen immer passenden Tasche (Gruppe) definieren lässt. Somit ist der Aufbau von technisch vergleichsweise einfach zu realisierenden Stetigförderern möglich, die durch die konstante Lücke («constant gap») zwischen den auf den Sortierförderer aufgegebenen Sortierstücken sehr hohe Durchsätze bei vergleichsweise geringer Fördergeschwindigkeit erreichen können. Zudem erlaubt die Bildung der Ketten von Aufnahmeelementen auch eine gewisse Kurventauglichkeit der Sortierförderer, so dass sich diese Sortierförderer auch über mehrere Ebenen mit einer hierdurch erreichbaren hohen Anzahl von anordenbaren Endstellen auszeichnen. Einen weiteren Vorteil dieser Ausgestaltung stellt die Möglichkeit der vergleichsweise einfachen Topload-Beschickung des Sortierförderers dar, da sowohl die Länge des Sortierstücks als auch die Lücken zwischen zwei Sortierstücken variabel sind und damit keine exakte Synchronisierung des Beschickung wie bei einem Constant-Pitch-Sorter erforderlich ist.

## Patentansprüche

1. Verfahren zum Sortieren von Sortierstücken (4a bis 4d) in mit ihrer Zieldestination logisch verknüpfte Endstellen (6), umfassend die folgenden Verfahrensschritte:
a) Bereitstellen eines Sortierförderers (8, 30, 38), der entlang eines Förderweges (10) eine Kette von zusammenhängenden Aufnahmeelementen (12, 32, 40) für die Sortierstücke (4a bis 4d) umfasst, wobei zumindest ein Teil dieser Aufnahmeelemente (12, 32, 40) individuell ansteuerbare Absortierelemente (14, 52) umfasst, mit denen ein Sortierstück (4a bis 4d) gemäss seiner Zieldestination in die entsprechend logisch zugeordnete Endstelle (6) aus dem Förderweg (10) ausschleusbar ist;
b) Aufgeben des Sortierstücks (4a bis 4d) auf den Sortierförderer (8, 30, 38);
c) Zuordnen des oder der von dem Sortierstück (4a bis 4d) auf dem Sortierförderer (8, 30, 38) beanspruchten Aufnahmeelemente (12, 32, 40) zu dem Sortierstück (4a bis 4d); und
d) Fördern des Sortierstücks (4a bis 4d) entlang des Förderweges (10) und Auslösen der Absortierelemente (14, 52) für zumindest einen Teil der so zugeordneten Aufnahmeelemente (12, 32, 40) zur Abgabe des Sortierstücks (4a bis 4d) in die diesem Sortierstück (4a bis 4d) logisch zugeordnete Endstelle (6).

2. Verfahren nach Anspruch 1,
**dadurch gekennzeichnet, dass**
die Sortierstücke (4a bis 4d) mit einem vorgebbaren Abstand auf den Sortierförderer (8, 30, 38) aufgegeben werden.

3. Verfahren nach Anspruch 1 oder 2,
**dadurch gekennzeichnet, dass**
die Zuordnung der von einem Sortierstück (4a bis 4d) auf dem Sortierförderer (8, 30, 38) beanspruchten Aufnahmeelemente (12, 32, 40) erst nach dem Aufgeben des Sortierstücks (4a bis 4d) auf den Sortierförderer (8, 30, 38) vorgenommen wird.

4. Verfahren nach Anspruch 1 oder 2,
**dadurch gekennzeichnet, dass**
Erfassungsmittel (20) vorgesehen sind, mit denen die von dem Sortierstück (4a bis 4d) auf dem Sortierförderer (8, 30, 38) beanspruchten Aufnahmeelemente (12, 32, 40) detektierbar sind.

5. Verfahren nach Anspruch 4,
**dadurch gekennzeichnet, dass**
eine Kamera (20) als Erfassungsmittel eingesetzt wird, deren Bilder mit einer Software nachbearbeitet werden, die feststellt, welche Aufnahmeelemente zumindest teilweise von einem Sortierstück abgedeckt sind.

6. Verfahren nach Anspruch 4 oder 5,
**dadurch gekennzeichnet, dass**
die Aufnahmemittel als Erfassungsmittel über einen kapazitiven und/oder optischen Sensor verfügen, mit dem die von dem Sortierstück auf dem Sortierförderer beanspruchten Aufnahmeelemente detektierbar sind.

7. Verfahren nach einem der Ansprüche 1 bis 6,
**dadurch gekennzeichnet, dass**
die von einem Sortierstück (4a bis 4d) beanspruchten Aufnahmeelemente (12, 32, 40) eine logische Aufnahmegruppe (22a bis 22d) bilden und die dieser logischen Aufnahmegruppe (22a bis 22d) zugeordneten Absortierelemente (14, 52) gleichzeitig oder zeitverzögert auslösbar sind.

8. Verfahren nach einem der vorangehenden Ansprüche,
**dadurch gekennzeichnet, dass**
der Sortierförderer als Schuhförderer (8) und die Absortierelemente als senkrecht zur Förderrichtung (10) des Sortierförderers (8) bewegbare Abwurfstifte (14), die über eine von dem Aufnahmeelement (12, 32, 40) gebildete Auflagefläche hinausragen, ausgestaltet sind.

9. Verfahren nach einem der vorangehenden Ansprüche 1 bis 7, **dadurch gekennzeichnet, dass**
der Sortierförderer als Kippsorter (30) und die Absortierelemente als Kippelemente ausgestaltet sind, wobei jedem Aufnahmeelement (32) ein Kippelement zugeordnet ist, mit dem das Aufnahmeelement (32) um eine in Förderrichtung (10) verlaufende Achse kippbar ausgestaltet ist.

10. Verfahren nach einem der vorangehenden Ansprüche 1 bis 7, **dadurch gekennzeichnet, dass**
der Sortierförderer als Taschensorter und die Absortierelemente als Bomb-bay-Elemente ausgestaltet sind, wobei jeder Boden des Aufnahmeelement als Bomb-bay-Element ausgestaltet ist, mit dem das Aufnahmeelement nach unten hin öffenbar und nach erfolgreichem Abwurf des Sortierstücks wieder verschliessbar ist.

11. Verfahren nach einem der vorangehenden Ansprüche 1 bis 7, **dadurch gekennzeichnet, dass**
der Sortierförderer als Taschensorter (38) und die Aufnahmeelemente (40) als einseitig an einem Fördermittel aufgehängte mindestens zweiteilige eine V-förmige Ablagefläche bildende Aufnahmeelemente (40) und die Absortierelemente als Kippmechanismus (52) ausgestaltet sind, wobei der Kippmechanismus (52) den von der Aufhängungsseite abgewandten Teil (40b) steuerbar um eine Kippachse schwenkbar nach unten fallen lässt.

12. System (2, 28, 36) zum Sortieren von Sortierstücken (4a bis 4d) in mit ihrer Zieldestination logisch verknüpfte Endstellen (6), umfassend:
a) einen Sortierförderer (8, 30, 38), der entlang eines Förderweges (10) eine Kette von zusammenhängenden Aufnahmeelementen (12, 32, 40) für die Sortierstücke (4a bis 4d) umfasst, wobei zumindest ein Teil dieser Aufnahmeelemente (12, 32, 40) individuell ansteuerbare Absortierelemente (14, 52) umfasst, mit denen ein Sortierstück (4a bis 4d) gemäss seiner Zieldestination in die entsprechend logisch zugeordnete Endstelle (6) aus dem Förderweg (10) ausschleusbar ist;
b) eine Anzahl von Endstellen (6), denen vor einer Sortiersteuerung (16) temporär eine oder mehrere Zieldestinationen logisch zuordenbar sind;
c) eine Aufgabevorrichtung (18, 33, 42) zum Aufgeben der Sortierstücke (4a bis 4d) auf den Sortierförderer (8, 30, 38);
d) mindestens ein Erfassungsmittel (20), mit dem das oder die von dem Sortierstück (4a bis 4d) auf dem Sortierförderer (8, 30, 38) beanspruchten Aufnahmeelemente (12, 32, 40) zu dem Sortierstück (4a bis 4d) zuordenbar ist; und
e) die Sortiersteuerung (16), die weiter ausgestaltet ist, den Sortierförderer (8, 30, 38) zum Fördern des Sortierstücks (4a bis 4d) entlang des Förderweges (10) anzusteuern und die Absortierelemente (14, 52) für zumindest einen Teil der so einem Sortierstück (4a bis 4d) zugeordneten Aufnahmeelemente (12, 32, 40) zur Abgabe des Sortierstücks (4a bis 4d) in die diesem Sortierstück logisch zugeordnete Endstelle (6) anzusteuern.

13. System (2, 28, 36) nach Anspruch 12,
**dadurch gekennzeichnet, dass**
die Sortierstücke (4a bis 4d) mit einem vorgebbaren Abstand auf den Sortierförderer (8, 30, 38) aufgebbar sind.

14. System (2, 28, 36) nach Anspruch 12 oder 13,
**dadurch gekennzeichnet, dass**
die Sortiersteuerung (16) mit dem mindestens einen Erfassungsmittel (20) so zusammenwirkt, dass die Zuordnung der von einem Sortierstück (4a bis 4d) auf dem Sortierförderer (8, 30, 38) beanspruchten Aufnahmeelemente (12, 32, 40) erst nach dem Aufgeben des Sortierstücks (4a bis 4d) auf den Sortierförderer (8, 30, 38) vornehmbar ist.

15. System (2, 28, 36) nach einem der vorangehenden Ansprüche 12 bis 14, **dadurch gekennzeichnet, dass**
eine Kamera (20) als Erfassungsmittel vorgesehen ist, deren Bilder mit einer Software nachbearbeitbar sind, die feststellen kann, welche Aufnahmeelemente (12, 32, 40) zumindest teilweise von einem Sortierstück (4a bis 4d) abgedeckt sind.

16. System (2, 28, 36) nach einem der vorangehenden Ansprüche 12 bis 15, **dadurch gekennzeichnet, dass**
die Aufnahmemittel als Erfassungsmittel über einen kapazitiven und/oder optischen Sensor verfügen, mit dem die von dem Sortierstück auf dem Sortierförderer beanspruchten Aufnahmeelemente detektierbar sind.

17. System (2, 28, 36) nach einem der Ansprüche 12 bis 16, **dadurch gekennzeichnet, dass**
die von einem Sortierstück (4a bis 4d) beanspruchten Aufnahmeelemente (12, 32, 40) eine logische Aufnahmegruppe (22a bis 22d) bilden und die dieser Aufnahmegruppe (22a bis 22d) zugeordneten Absortierelemente (14, 52) gleichzeitig oder zeitverzögert auslösbar sind.

18. System nach einem der vorangehenden Ansprüche 12 bis 17, **dadurch gekennzeichnet, dass**
der Sortierförderer als Schuhförderer (8) und die Absortierelemente als senkrecht zur Förderrichtung (10) des Sortierförderers (8) bewegbare Abwurfstifte (14), die über eine von dem Aufnahmeelement (12) gebildete Auflagefläche hinausragen, ausgestaltet sind.

19. System nach einem der vorangehenden Ansprüche 12 bis 17, **dadurch gekennzeichnet, dass**
der Sortierförderer als Kippsorter (28) und die Absortierelemente als Kippelemente ausgestaltet sind, wobei jedem Aufnahmeelement (32) ein Kippelement zugeordnet ist, mit dem das Aufnahmeelement (32) um eine in Förderrichtung (10) verlaufende Achse kippbar ausgestaltet ist.

20. System nach einem der vorangehenden Ansprüche 12 bis 17, **dadurch gekennzeichnet, dass**
der Sortierförderer als Taschensorter und die Absortierelemente als Bomb-bay-Elemente ausgestaltet sind, wobei jeder Boden des Aufnahmeelement als Bomb-bay-Element ausgestaltet ist, mit dem das Aufnahmeelement nach unten hin öffenbar und nach erfolgreichem Abwurf des Sortierstücks wieder verschliessbar ist.

21. System nach einem der vorangehenden Ansprüche 12 bis 17, **dadurch gekennzeichnet, dass**
der Sortierförderer als Taschensorter (36) und die Aufnahmeelemente (40) als einseitig an einem Fördermittel aufgehängte mindestens zweiteilige eine V-förmige Ablagefläche bildende Aufnahmeelemente (40) und die Absortierelemente als Kippmechanismus (52) ausgestaltet sind, wobei der Kippmechanismus (52) den von der Aufhängungsseite abgewandten Teil (40b) des zweiteiligen Aufnahmeelements (40) steuerbar um eine Kippachse schwenkbar nach unten fallen lässt.
